# EUROPEAN PATENT APPLICATION

(11) **EP 0 947 901 A2**
(43) Date of publication of application: **06.10.1999**
(21) Application number: 99302523.8
(22) Date of filing: 31.03.1999
(51) Int. Cl.: G05D 23/02

(54) **Maintenance monitor system for steam turbine valves**

(30) Priority: 03.04.1998 US 54741
(71) Applicant: GENERAL ELECTRIC COMPANY, Schenectady, NY 12345 (US)
(72) Inventor: Davis, Donald Harry, Scotia, New York 12302 (US)
(74) Representative: Goode, Ian Roy

(57) **Abstract**

In an operating steam turbine, a valve monitoring system is provided for a valve assembly having a valve (12), a valve stem (16) supporting the valve and adapted to move in valve opening and valve closing directions; a valve actuator (18) for causing the valve stem to move in either of the directions; a first sensor (38) for measuring stroke length of the valve stem in opening and closing directions; a second sensor (36) for measuring hydraulic pressure required to move the valve in the opening and closing directions; and means (40,42) for recording signals from the first and second sensors and comparing the signals to corresponding reference values to thereby enable identification of abnormal valve behavior.

## Description

This invention relates generally to steam turbines and more particularly to a monitoring system for steam turbine valves.

It is important for the safe and reliable operation of a steam turbine that valves and associated actuators open and close to control steam flow as required by the control system. Due to the severe operating conditions in high pressure and high temperature steam applications, it is necessary to inspect these valves frequently for wear, excessive friction, oxidation of sliding parts, etc. in order to insure the required reliability. These inspections sometimes require costly shutdowns of the turbine for disassembly and inspection of the valves.

At the present time, steam turbine valves are also "tested" by closing and reopening them on a regular basis while the turbine is operating online. The valve is observed visually to determine that the valve stem motion is smooth and that full stroke is obtained. Present online valve testing methods, however, do not provide quantitative data on the operating condition of turbine valves, thus the maintenance schedule is set using average experience, and must be set conservatively for safety and reliability reasons. As a result, little indication of an impending problem is given by the present tests, and this may result in very costly unscheduled shutdowns. As a result, valve maintenance requirements are often a limiting item, dictating a conservative and therefore costly maintenance schedule.

It is also known to measure valve stroke vs. force required to move the valve in a laboratory setting, prior to valve shipment. Such one-of-a-kind tests, however, merely determine the acceptability of the valve as assembled, and do not in any way enable, or even relate to, online valve testing after installation within the turbine.

It is the overall objective of this invention to provide an improved valve monitoring system, which can optimize the operating time between valve inspections, consistent with the requirements of safety and reliability.

In accordance with an exemplary embodiment of this invention, a monitoring system is provided which will record on an ongoing basis hydraulic pressure vs. valve stem stroke as a quantitative measure of valve performance. The hydraulic pressure is a measure of the force required to stroke the valve and thus also a measure of valve performance. When this system is coupled to a computer, future poor performance of the valve can be anticipated more precisely than with prior testing techniques.

More specifically, the monitoring system includes a valve stroke measuring device and a pressure transducer to measure hydraulic pressure while stroking the valve. During routine valve testing in the exemplary embodiment, the computer also monitors parameters such as rate of valve opening or closing, and hydraulic pressure difference between opening and closing at various stroke points. The instrument outputs are sent to a signal processor and a computer system which records and compares the output signals with predetermined limits, design values and/or historical data stored in the computer, and which can signal the need for present or future maintenance.

Accordingly, in its broader aspects, the invention provides in an operating steam turbine, a valve monitoring system for a valve assembly having a valve, a valve stem supporting the valve and adapted to move linearly (or rotationally, depending on the specific valve construction) in valve opening and valve closing directions; a valve actuator for causing the valve stem to move in either of the opening and closing directions; a first sensor for measuring stroke length of the valve stem in the opening and closing directions; a second sensor for measuring hydraulic pressure required to move the valve in the opening and closing directions; and means for recording signals from the first and second sensors and comparing the signals to corresponding reference values to thereby enable identification of abnormal valve behavior.

In another aspect, the invention relates to a method of testing a steam turbine valve, the valve having a valve stem extending through a housing, the stem having a piston fixed to a distal end thereof inside the housing comprising the steps of:
a) measuring valve stem stroke length in opening and closing directions;
b) measuring hydraulic pressure required to move the valve;
- c) generating electrical output signals from steps a) and b);
d) sending the signals to a signal processor and then to a computer; and
e) comparing the signals to data stored in the computer including normal valve stroke length and hydraulic pressure measurements, and to thereby enable identification of abnormal valve behavior.

Embodiments of the invention will now be described, by way of example, with reference to the accompanying drawings, in which:
FIGURE 1 is a side elevation, partly in section, illustrating a steam turbine valve and actuator, along with a monitoring system in accordance with this invention;
Figure 2 is a graph illustrating normal valve operation in terms of opening and closing strokes and hydraulic pressure; and
FIGURES 3-5 are schematic illustrations of the monitoring system of this invention with alternative valve constructions.

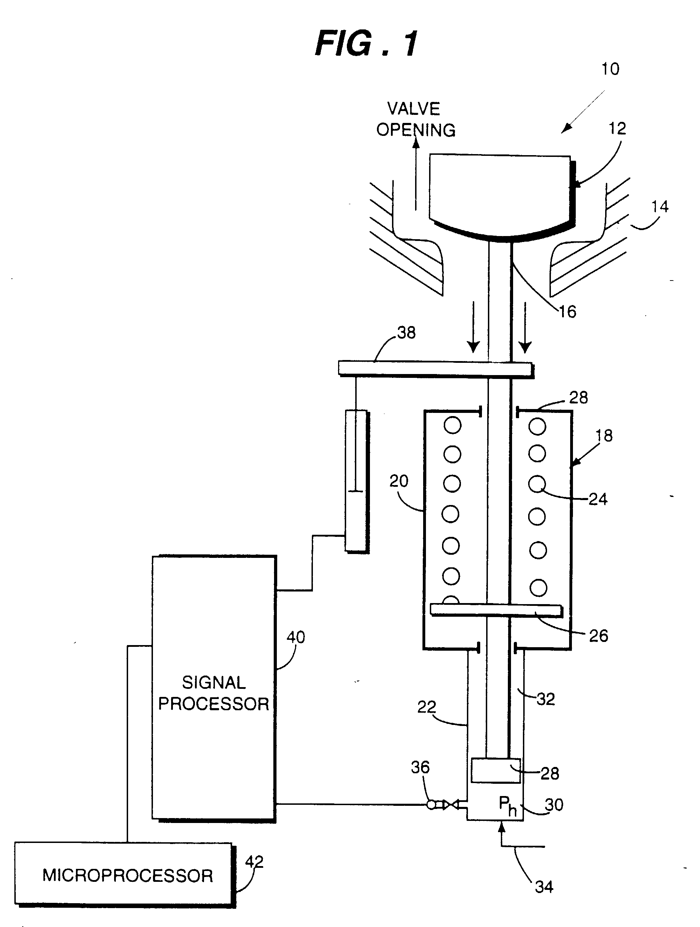

In Figure 1, an exemplary embodiment is illustrated wherein a valve and actuator assembly 10 includes a steam turbine valve 12 engageable with an annular seat 14 (only partially shown). The valve 12 includes an elongated valve stem 16 which extends in an downstream direction (i.e., in the direction of flow through the seat 16) and into an actuator housing 18. The latter includes a relatively larger diameter spring enclosing section 20 and a relatively smaller diameter piston enclosing section 22. Within section 20, there is a coil spring 24 (or Bellville or other suitable spring) which is supported on a flange 26 secured to the stem 16 and which also abuts against an upper wall of the housing section 20, thus biasing the valve 12 in a direction toward engagement with the seat 14.

The stem 16 continues beyond flange 26 into the smaller section 22, terminating at a piston 28. In other words, valve 12 and piston 28 are at opposite ends of the stem 16. The piston 28 divides the housing section 22 into chambers 30, 32, respectively, below and above the piston. The lower chamber 30 (as viewed in the Figure) is pressurized via a hydraulic pressure input shown at 34, and a pressure transducer 36 communicates with chamber 30 to provide an electrical output corresponding to the pressure in that chamber. It will be appreciated that the spring 24 is calibrated so that movement of the valve 12 toward or away from the seat is determined by pressure within the cavity 30 below the piston 28. In this regard, there are also steam forces acting on the valve stem, which during turbine operation may be much larger than the spring force.

Above the housing 18, there is a linear, variable differential transformer (LVDT) stroke measuring device 38 fixed to the stem 16, the device also providing an electrical output corresponding to stem movement.

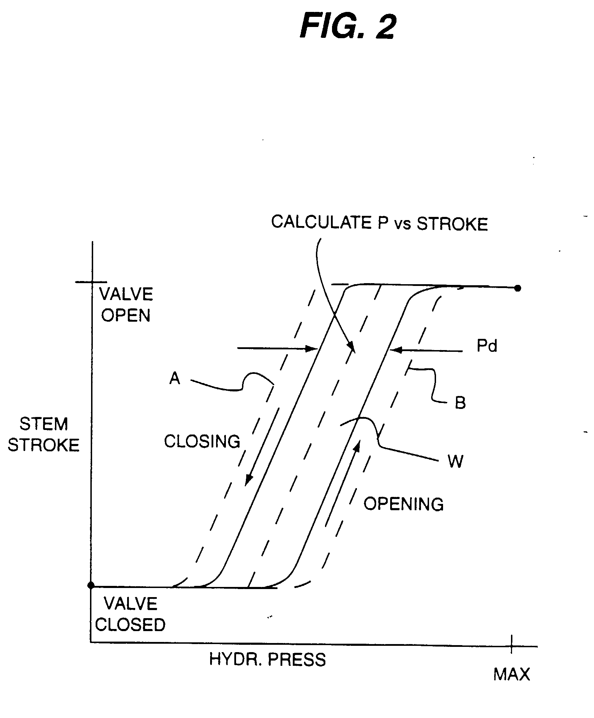

The electrical outputs of the transducer 36 and stroke measuring device 38 are sent to a signal processing device 40 and then to a microprocessor (e.g., a PC) 42 which records and compares the outputs with predetermined stored values representing normal and calculated valve behavior. With reference to Figure 2, a normal valve output is plotted on a stroke vs. hydraulic pressure graph. During routine valve testing, the computer 42 will also monitor the rate of valve opening or closing as well as pressure difference between opening and closing at various points along the stroke, etc. The solid lines show a plot of hydraulic pressure vs. valve stroke for a normally operating valve, showing both opening and closing directions. The dotted line between the solid lines shows the calculated hydraulic pressure required to balance the spring and steam forces acting on the valve stem. The pressure difference Pd is a measure, for any given stroke, of frictional forces which, if excessive, will stall the valve. Thus, when recorded values fall outside the area W enclosed by the solid lines in Figure 2 by more than a predetermined amount, maintenance may be indicated, and the computer would display an appropriate signal to this effect on a monitor. In other words, depending on the particular application, valve and valve experience, readings within a larger window may be acceptable (see the dotted lines A and B in Fig. 2), but readings outside this larger window may be so abnormal as to indicate the need for immediate maintenance. Of course, all relevant valve information and historical data is stored in the computer memory and is used as necessary to provide the desired display output.

The computer may also analyze readings within the window to determine the rate at which they approach the solid lines and/or the extended window defined by dotted lines A and/or B and thereby identify abnormal valve behavior indicating possible future maintenance, including projections as to when the valve will stick, etc.

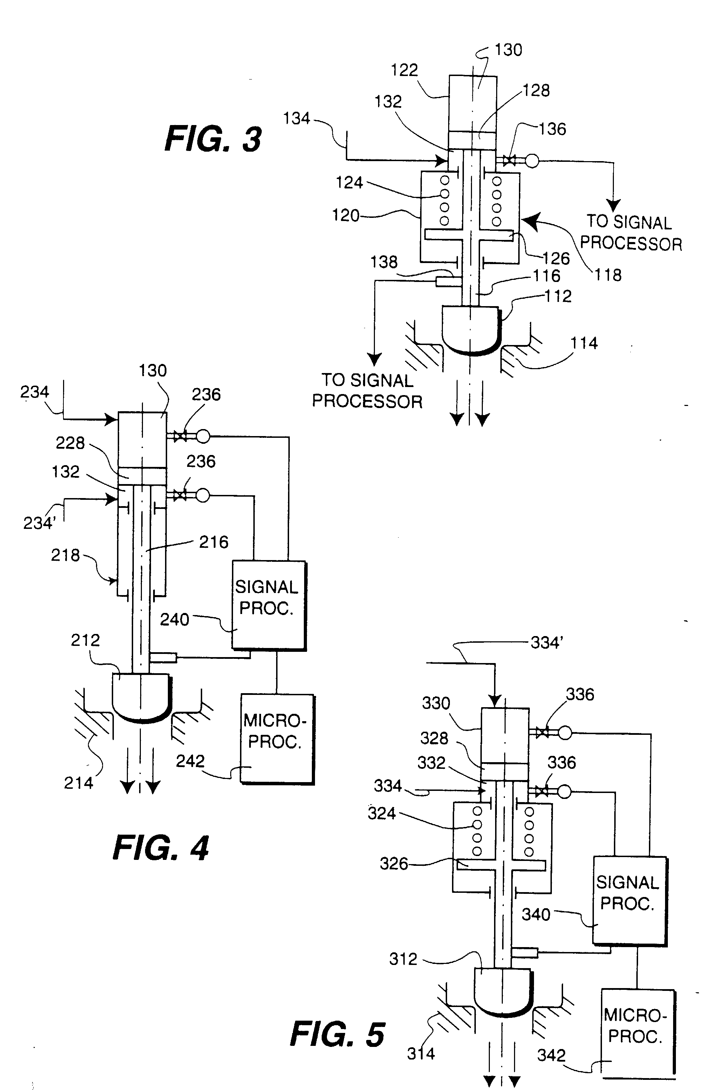

The monitoring system in accordance with this invention is not limited to use with the specific valve construction illustrated in Figure 1. In fact, the system may be used in connection with various rotary and linear type valves including butterfly valves, and overhead actuator-type valves. For example, and with reference to Figure 3, an overhead actuator-type valve is illustrated, using reference numerals similar to those used in Figure 1 for corresponding components, but with the prefix "1" added. In this embodiment, the actuator assembly is upstream of the valve 112 (in the flow direction), but the monitoring system is otherwise similar to that described in connection with Figure 1. The annular seat 114, with the valve stem 116 extending in a upstream direction and into the actuator housing 118. As in the earlier described embodiment, the housing 118 includes a relatively larger diameter spring enclosing section 120 and a relatively smaller diameter piston enclosing section 122. Within section 120, there is a coil (or other suitable type) spring 124 which is supported on a flange 126 secured to the stem 116. The other end of the spring abuts against the upper wall of the housing 120, thus biasing the valve 112 in an downstream direction toward engagement with the seat 114.

Valve stem 116 terminates at a piston 128 located in the smaller diameter housing section 122, with the piston dividing the housing section 122 into chambers 130 and 132, respectively. A pressure transducer 136 communicates with the chamber 132 and provides an electrical output corresponding to the pressure in that chamber. Below the housing 118, there is a variable differential transformer stroke measuring device 138 fixed to the stem 116, providing an electrical output corresponding to stem movement. As indicated above, the operation of the monitoring system in this arrangement is otherwise similar to the arrangement illustrated in Figures 1 and 2.

In Figure 4, a double acting type actuator is illustrated, with hydraulic pressure applied to either side of the actuator piston 228 (via inputs 234, 234'), depending on whether the valve is opening or closing. Here again, reference numerals used in the figure are similar to those used for corresponding components in Figure 1, but with the prefix "2" added. In this embodiment, the valve arrangement is similar to the Figure 3 embodiment, but here, two pressure transducers 236 are employed, in communication with the respective chambers 230, 232 on either side of the piston 228 to monitor the hydraulic pressure in both chambers. This type valve assembly eliminates the need for a spring such as 24 (Figure 1) or 124 (Figure 3). Otherwise, the operation of the monitoring system is as previously described.

In Figure 5, another double actuator-type valve assembly is shown, but in combination with a spring. More specifically, and using reference numerals similar to those used for corresponding components in Figures 1, 3 and 4, but with the prefix "3" added, a pair of pressure transducers 336 are located on either side of the piston 328, in communication with chambers 330 and 332, respectively. Hydraulic fluid is supplied to chamber 330, 332 by means of input 334, 334'. At the same time, a spring 324 continuously biases the piston flange 326 in a valve closing direction.

In both arrangements illustrated in Figures 4 and 5, the signal processor takes the output from the pair of pressure transducers above and below the piston and combines the pressures to calculate an effective net opening or closing pressure which would become the horizontal axis of Figure 2.

Those of ordinary skill in the art will understand that still further valve constructions may benefit from the monitoring system in accordance with this invention. Those skilled in the art will also understand that the data generated in accordance with this invention may be utilized in various additional ways to monitor, record and predict valve behavior.

## Claims

1. A valve monitoring system for a valve assembly of a steam turbine, the valve assembly having a valve and a valve stem supporting said valve, the valve stem being adapted to move in valve opening and valve closing directions; a valve actuator for causing said valve stem to move in either of said directions; a first sensor for measuring stroke length of the valve stem in opening and closing directions; a second sensor for measuring hydraulic pressure required to move said valve in said opening and closing directions; and means for recording signals from said first and second sensors and comparing said signals to corresponding reference values to thereby enable identification of abnormal valve behavior.

2. The system of claim 1 wherein said first sensor comprises an LVDT stroke measuring device.

3. The system of claim 2 wherein said second sensor comprises a pressure transducer.

4. The system of claim 3 wherein electrical outputs from said first and second sensors are sent to a signal processor and then to a microprocessor.

5. The system of claim 1 wherein said valve stem extends through a first housing and into a second housing, said valve stem having a piston on a distal end thereof, separating said second housing into upper and lower chambers.

6. The system of claim 1 wherein said valve stem extends into a housing, said valve stem having a piston on a distal end thereof, separating said housing into upper and lower chambers.

7. The system of claim 5 wherein said second sensor communicates with said lower chamber.

8. The system of claim 7 wherein said first housing encloses a spring engaged at one end with a flange on said valve stem, such that said stem is urged in the closing direction by the spring and in the opening direction by pressure in said lower chamber.

9. The system of claim 5 wherein said first sensor is attached to said valve stem outside said first housing.

10. The system of claim 8 wherein said first sensor is attached to said valve stem outside said first housing.

11. The system of claim 6 wherein hydraulic pressure is applied to said upper and lower chambers depending on direction of movement of said valve stem.

12. A method of testing a valve in an operating steam turbine, the valve having a valve stem extending through a housing, said stem having a piston fixed to a distal end thereof inside said housing, the method comprising the steps of:
a) measuring valve stem stroke length in opening and closing directions;
b) measuring hydraulic pressure required to move the valve;
c) generating electrical output signals from steps a) and b);
d) sending said signals to a signal processor and then to a computer; and
e) comparing said signals to data stored in said computer relating to normal valve stroke length and hydraulic pressure measurements, and to thereby enable identification of abnormal valve behavior.

13. The method of claim 12 and including the step of:
f) generating a warning in the event the signals exceed by a predetermined amount said normal valve stroke length and hydraulic pressure measurements.

14. The method of claim 12 wherein step (b) is carried out by measuring pressure on opposite sides of said piston, depending on the direction of movement thereof.
